# EUROPEAN PATENT APPLICATION

(11) **EP 2 325 734 A2**
(43) Date of publication of application: **25.05.2011**
(21) Application number: 10188588.7
(22) Date of filing: 22.10.2010
(51) Int. Cl.: G06F 3/041, G06F 3/042

(54) **Display apparatus and method for calibrating a touch system**

(30) Priority: 20.11.2009 KR 20090112880
(71) Applicant: SAMSUNG ELECTRONICS CO., LTD., Suwon-si Gyeonggi-do 442-742 (KR)
(72) Inventor: Jeong, Ki-jun, Seoul (KR); Seo, Young-kwang, Seoul (KR); Park, Seung-kwon, Gyeonggi-do (KR); Kang, Jung-min, Seoul (KR); Lee, Dong-ho, Seoul (KR)
(74) Representative: Fearnside, Andrew Simon

(57) **Abstract**

A display apparatus (100) and method for calibrating a touch system are provided, the display apparatus including: a display panel (110) which displays an image; an image processor (120) which processes an image displayed on the display panel; a light source unit (130) provided on the display panel and which emits light; a camera unit (140) which photographs an image to detect a touch position by a user on the display panel and a calibration image of light emitted by the light source unit; and a controller (180) which controls the image processor to process an image on the basis of the touch position by the user on the image taken by the camera unit and calibrating the touch position by the user on the basis of a position of the light on the calibration image taken by the camera unit.

## Description

### BACKGROUND

### Field

Apparatuses and methods consistent with the exemplary embodiments relate to a display apparatus and a method for calibrating a touch system, particularly though not exclusively to enable proper calibration in a display apparatus with a multi-touch function, and more particularly, to a display apparatus and a method for calibrating a touch system, which desirably solves inaccurate calibration which may occur in a calibration process with a preset calibration value which allows a position on a display panel to agree with a position on an image taken by a camera when the display panel and/or camera is changed in position by physical impact.

### Description of the Related Art

There is an increasing demand for a display apparatus with a multi-touch function. The multi-touch function may be realized by a variety of methods, wherein a camera based multi-touch function includes frustrated total internal reflection (FTIR), read diffused illumination (DI), side DI, etc. According to these methods, when an infrared ray emitter emits infrared rays (IR) around a display panel, the light is diffused-reflected by a finger at a point where the finger touches the display panel. At this point, generated light with a specific wavelength is detected and photographed by a camera, and an image in the photo is processed by a computer to calculate a position of the finger.

In calculating the position of the finger, if a coordinate indicating an actual position on the display panel and a coordinate of a position on the image recognized by the camera are different, the position of the finger is not accurately calculated. In order to solve this problem, a calibration value which allows the coordinate of the position on the display panel to agree with the coordinate of the position on the image by the camera is stored in advance, and calibration is conducted on the basis of the stored calibration value.

However, in the case where a physical position of the display panel or camera is changed, proper calibration may not be realized even if calibration is carried out based on the stored calibration value.

### SUMMARY

Accordingly, one or more exemplary embodiments provide a display apparatus and a method for calibrating a touch system which desirably enables proper calibration of a display panel even when a physical change in the position of the display panel or a camera occurs.

According to an aspect of an exemplary embodiment, there is provided a display apparatus including: a display panel which displays an image; an image processor which processes the image to be displayed on the display panel; a light source unit provided on the display panel and which emits light; a camera unit which photographs a touch detecting image to detect a touch position by a user on the display panel and which photographs a calibration image of the light emitted by the light source unit; and a controller which controls the image processor to process the displayed image on the basis of the touch position by the user on the touch detecting image photographed by the camera unit and which calibrates the touch position by the user on the basis of a position of the light on the calibration image taken by the camera unit.

The light source unit may be disposed on at least one corner of the display panel.

The display apparatus may further include a storage unit which stores a preset calibration value and a preset coordinate value indicating an actual position of the light on the display panel, wherein the preset calibration value is a value used to correspond a coordinate value of the actual touch position by the user on the display panel to a coordinate value of the touch position detected on the touch detecting image photographed by the camera unit, and the controller calibrates the detected touch position by the user according to the preset calibration value..

When a calibration function of the display panel is initiated, the controller controls the light source unit to emit the light, controls the camera unit to photograph the calibration image of the light, and compares the coordinate value indicating the position of the light from the calibration image with the preset coordinate value stored in the storage unit, and if the coordinate value of the position of the emitted light on the calibration image is different from the preset coordinate value, modifies the preset calibration value according to the difference and controls the storage unit to store the modified preset coordinate value.

The display apparatus may further include a camera position adjustment unit which adjusts a position of the camera unit, wherein when a calibration function of the display panel is initiated, the controller controls the light source unit to emit the light, controls the camera unit to photograph the calibration image of the light, and compares the coordinate value indicating the position of the light from the calibration image with the preset coordinate value stored in the storage unit, and as a result, when the calculated coordinate value and the preset coordinate value are determined to be different, the controller controls the camera position adjustment unit to reflect a difference between the coordinate values on a position of the camera unit so as to adjust the position of the camera unit.

The display apparatus may further include a user input unit which receives a user's input to initiate a calibration function of the display panel.

The light source unit may emit infrared light.

The camera unit may further include a filter corresponding to a wavelength of light emitted by the light source unit.

According to an aspect of another exemplary embodiment, there is provided a method of calibrating a display apparatus, the method including: emitting light by a light source unit provided on a display panel; photographing an image of the light emitted from the light source unit by a camera unit; and calibrating a touch position by a user on the display panel based on a position of the light on the image photographed by the camera unit.

The at least one light source unit may be disposed on at least one corner of the display panel.

The method may further include storing a preset calibration value and a preset coordinate value indicating an actual position of the light on the image taken by the camera unit in a storage unit, wherein the calibrating the touch position comprises calibrating the touch position by the user according to the preset calibration value, and wherein the preset calibration value is a value used to correspond a coordinate value of the actual touch position by the user on the display panel to a coordinate value of the touch position detected on the touch detecting image photographed by the camera unit.

The method may further include: comparing the coordinate value indicating the position of the light from the image taken by the camera unit with the preset coordinate value stored in the storage unit; and if the coordinate value of the position of the emitted light on the calibration image is different from the preset coordinate value, modifying the preset calibration value according to the difference and storing the modified preset calibration value in the storage unit.

The method may further include: comparing the coordinate value indicating the position of the light from the image taken by the camera unit with the preset coordinate value stored in the storage unit; and when the coordinate values are different, adjusting a position of the camera unit to reflect a difference between the coordinate values on the position of the camera unit.

The method may further include receiving a user's input to initiate a calibration function of the display panel through a user input unit.

The light source unit may emit infrared light.

The camera unit may include a filter corresponding to a wavelength of the light emitted by the light source unit.

According to an aspect of another exemplary embodiment, there is provided a method of calibrating a display apparatus, the method including: emitting, by a light source unit provided on the display apparatus, light to a display panel of the display apparatus; photographing, by a camera unit, an image of the light emitted from the light source unit; determining a difference between a coordinate value of a position of the emitted light on the photographed image to a coordinate value of an actual position of the emitted light on the display panel; and calibrating the display apparatus according to the determined difference.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates a control block diagram of a display apparatus according to an exemplary embodiment;

FIG. 2 illustrates a position of a light source unit on a display panel according to an exemplary embodiment;

FIG. 3 illustrates a change in the position of the light source unit according to an exemplary embodiment;

FIG. 4 illustrates a method of calibrating the display panel according to an exemplary embodiment;

FIG. 5 is a flow chart illustrating a method of calibrating the display apparatus according to an exemplary embodiment;

FIGs. 6A and 6B are a flow chart illustrating a method of calibrating the display apparatus according to an exemplary embodiment; and

FIGs. 7A and 7B are a flow chart illustrating a method of calibrating the display apparatus according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

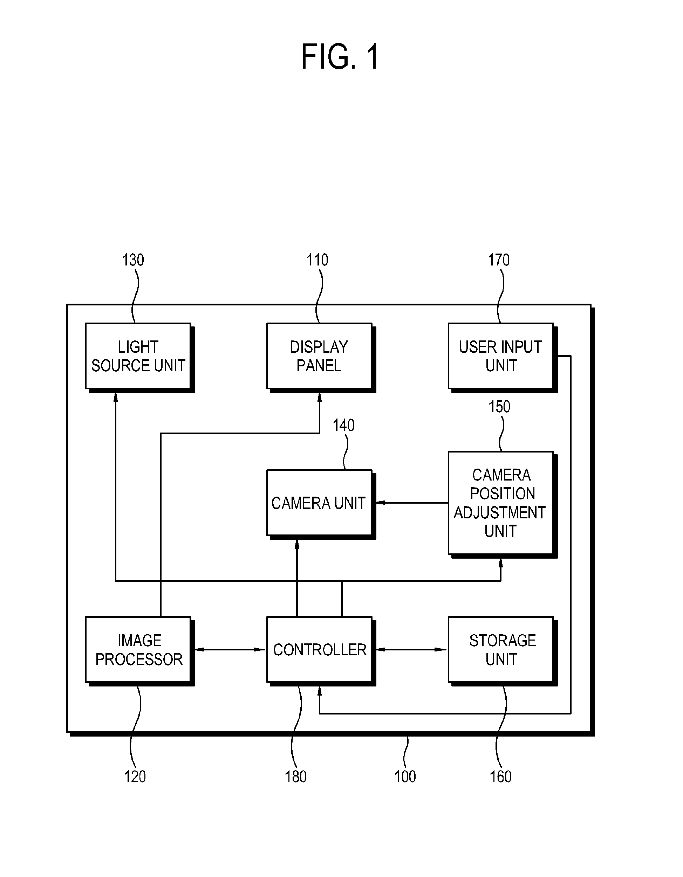

FIG. 1 illustrates a control block diagram of a display apparatus 100 according to an exemplary embodiment. As shown in FIG. 1, the display apparatus 100 includes a display panel 110, an image processor 120, a light source unit 130, a camera unit 140, a camera position adjustment unit 150, a controller 180, a storage unit 160, and a user input unit 170.

The display apparatus 100 may include any electronic device having a touch display panel. For example, the display apparatus 100 may include a digital television (TV), a personal computer (PC), a mobile PC, a mobile electronic device, etc. Furthermore, the display apparatus 100 may include a tabletop display, a large format display (LFD), a digital signage, a digital information display (DID), etc.

The display panel 110 displays an image. The display panel 110 may include a display screen and a touch panel which is touchable by a user. For example, the touch panel is formed of acryl or tempered glass with a uniform thickness. The display screen may include a liquid crystal panel having a liquid crystal layer, an organic light emitting panel having a light emitting layer formed of organic materials, a plasma display panel, etc.

The image processor 120 processes an image signal to be displayed on the display panel 110. Specifically, the image processor 120 processes an image signal, on the basis of a user's touch spot obtained from an image taken by the camera unit 140 (described below), to be displayed on the display panel.

The light source unit 130 is disposed in the display panel 110 to emit light, and at least one light source unit 130 is provided. The light source unit 130 may be disposed in at least one corner of the display panel 110. In some exemplary embodiments, the light source unit 130 may be disposed in four corners of the display panel 110.

Separately from the light source unit 130, a second light source unit (not shown) may be provided on a side of the touch panel of the display panel 110. Thus, when the second light source unit emits light, the touch panel totally reflects the emitted light. However, the emitted light is diffused-reflected in a region where a user's finger (or any touch object) is positioned. The camera unit 140 photographs the spot where the diffused reflection occurs, and the touch spot by a user is detected on the basis of the photographed spot. The second light source unit (not shown) may be disposed in a lower position of the display panel 110 at a certain distance to emit light to the touch panel.

When a calibration function of the display panel 110 is initiated through the user input unit 170 (described below) the controller 180 allows only the light source unit 130 to generate light and blocks the second light source unit (not shown) so as not to generate light. Accordingly, only the spot of light generated by the light source unit 130 can be photographed by the camera unit 140.

The light source unit 130 and the second light source unit (not shown) may emit infrared light. The light source unit 130 may be an infrared optical element in which infrared light in a specific wavelength is incident, for example, 850nm, 880nm and 940nm.

The camera unit 140 photographs an image to detect a touch position by a user on the display panel 110 and an image of light generated from at least one light source unit 130.

When the second light source unit (not shown) emits light to the touch panel, diffused reflection of light occurs only in the spot where a user's finger is positioned, but total reflection occurs in the rest of the area. The camera unit 140 photographs an image of the display panel 110 which is used to calculate the spot of the diffused reflection and to detect the touch position by a user.

Further, when the light source unit 130 emits light, the camera unit 140 photographs an image of light generated from at least one light source unit 130 to help calculate the position of the light. In addition, when the light source unit 130 emits infrared light in a specific wavelength, the camera unit 140 may further include a filter corresponding to the specific wavelength. Thus, the filter passes through wavelengths only in a specific range emitted from the light source unit 130 but filters wavelengths in the other range.

The camera position adjustment unit 150 adjusts the position of the camera unit 140. The camera position adjustment unit 150 holds the camera unit 140 to adjust its position in every direction. The camera position adjustment unit adjusts the position of the camera unit 140 through a serial port of the controller 180.

The storage unit 160 stores a preset calibration value and a preset coordinate value indicating the position of light in an image taken by the camera unit preset. Here, the calibration value is a value used to correspond or match coordinate values indicating the position on the display panel 110 to coordinate values of an image taken by the camera unit 140. Therefore, the calibration value is to calibrate homography values of an image on the display panel 110 and an image taken by the camera unit 140 to agree with each other. Actually, a touch position by a user on the display panel 110 may be different from one in an image taken by the camera unit 140, and thus the calibration value is used to calibrate the touch position by a user. Therefore, the controller 180 (described below) conducts calibration of the touch position by a user using the preset calibration value.

The user input unit 170 receives a user's input to initiate a calibration function of the display panel 110. The user input unit 170 may, for example, be provided as buttons, dials, keys, etc. in the display apparatus or a wired or wireless remote controller.

The controller 180 controls the image processor 120 to process an image based on a touch position by a user on an image taken by the camera unit 140, and conducts calibration of the touch position by the user based on a position of light on the image taken by the camera unit 140.

The controller 180 calculates a touch position by a user on the display panel 110 and a touch position by a user on an image taken by the camera unit 140 and calibrates a difference between the two touch positions based on the calibration value stored in the storage unit 160. Accordingly, the controller 180 controls the image processor 120 to process an image desired by the user to be displayed on the display panel 110 based on the calibrated touch position.

Meanwhile, when a calibration function of the display panel 110 is initiated by the user input unit 170, the controller 180 controls at least one light source unit 130 to generate light, controls the camera unit 140 to photograph an image of the light, calculates a coordinate value indicating the position of light on the image, and compares the calculated coordinate value with a preset coordinate value indicating a position of light stored in the storage unit 160.

As a result, when the calculated coordinate value and the preset coordinate value are determined to be the same, the controller 180 calibrates the display panel 110 on the basis of the preset calibration value stored in the storage unit 160.

When the calculated coordinate value and the preset coordinate value are determined to be different, the controller 180 calculates a difference between the two values, modifies the preset calibration value stored in the storage unit to reflect the difference by using an affine transformation, and stores the modified calibration value in the storage unit 160. The controller 180 calibrates the display panel 110 according to the modified calibration value.

Alternatively, when the calculated coordinate value and the preset coordinate value are determined to be different, the controller 180 calculates a difference between the two values and controls the camera position adjustment unit 150 to adjust a position of the camera unit 140 so as to reflect the difference.

When the position of the camera unit 140 is adjusted by the camera position adjustment unit 150, the controller 180 conducts calibration of the display panel 110 based on the preset calibration value stored in the storage unit 160.

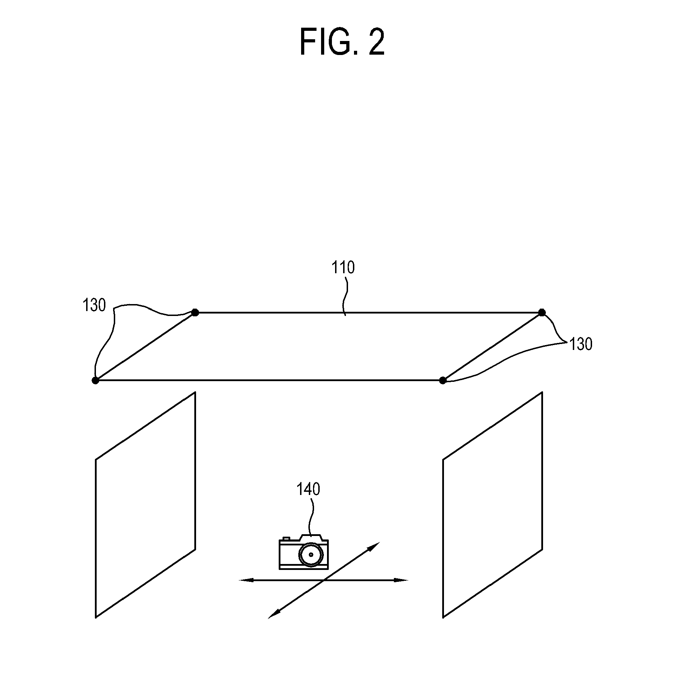

FIG. 2 illustrates a position of the light source unit 130 on the display panel according to an exemplary embodiment. As shown in FIG. 2, the light source unit 130 may be disposed on the four corners of the display panel 110. Therefore, the camera unit 140 positioned under the display panel 110 at a certain distance can photograph an image of light generated by the light source unit 130 to detect a position of the light. The image of the light to detect the position of the light may be photographed in advance and stored in the storage unit 160 to be used as a reference value.

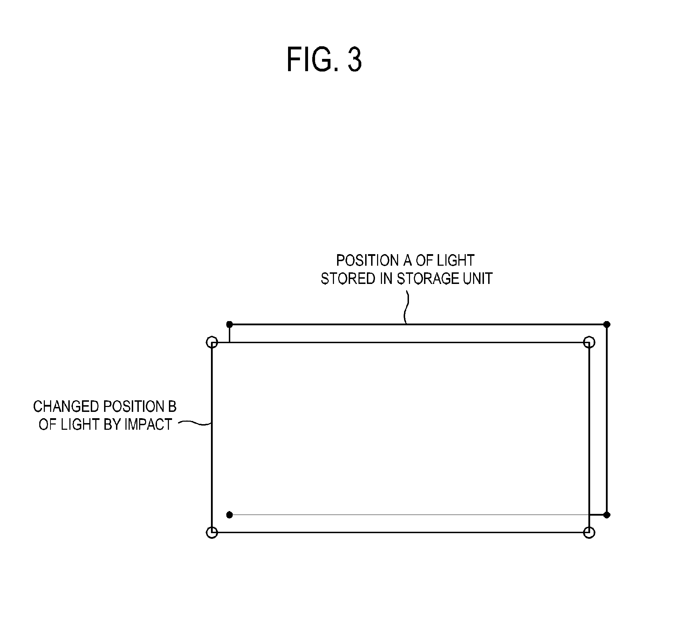

FIG. 3 illustrates a change in the position of the light source unit 130 according to an exemplary embodiment. In FIG. 3, Position A shows a position of light stored in the storage unit 160. However, when a position of the display panel 110 or the camera unit 140 is changed by any physical impact, and the camera unit 140 photographs an image of light generated from the light source unit 130 positioned on the display panel 110, a position of the light may be changed (Position B). The exemplary embodiments are provided to resolve this problem.

In this case, according to an exemplary embodiment, the controller 180 calculates a coordinate value of the position (position B) of the light on the image taken by the camera unit 140 and compares the calculated coordinate value of the position B with a preset coordinate value of the position (Position A) of the light stored in the storage unit 160. Then, when the calculated coordinate value and the preset coordinate value are determined to be different, the controller 180 calculates a difference between the values, modifies the preset calibration value stored in the storage unit 160 to reflect the difference by using an affine transformation, and stores the modified calibration value in the storage unit 160. Accordingly, the controller 180 calibrates the display panel 110 according to the modified calibration value.

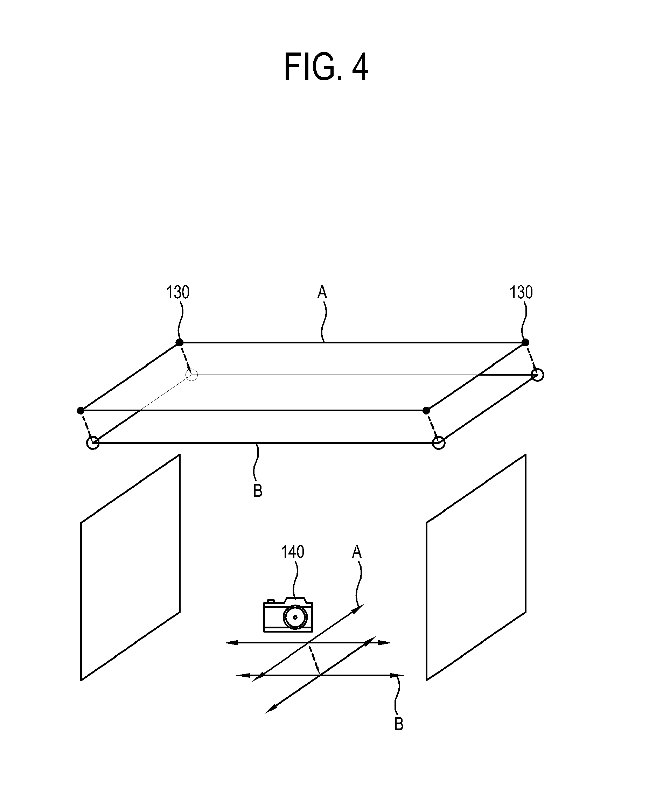

FIG. 4 illustrates a method of calibrating the display panel according to another exemplary embodiment. Similar to FIG. 3, when a position of the display panel 110 or the camera unit 140 is changed by any physical impact, and the camera unit 140 photographs an image of light generated from the light source unit 130 positioned on the display panel 110, a position of the light may be changed (Position B).

In this case, according to an exemplary embodiment, the controller 180 calculates a coordinate value of the position (Position B) of the light on the image taken by the camera unit 140 and compares the calculated coordinate value of the position B with a preset coordinate value of the position (Position A) of the light stored in the storage unit 160. When the calculated coordinate value and the preset coordinate value are determined to be different, the controller 180 calculates a difference between the values and controls the camera position adjustment unit 150 to adjust a position of the camera unit 140 so as to reflect the difference on the position of the camera unit 140. Accordingly, the controller 180 controls the camera position adjustment unit 150 to adjust the position of the camera unit 140 from Position A to Position B. The controller 180 calibrates the display panel 110 based on the preset calibration value stored in the storage unit 160.

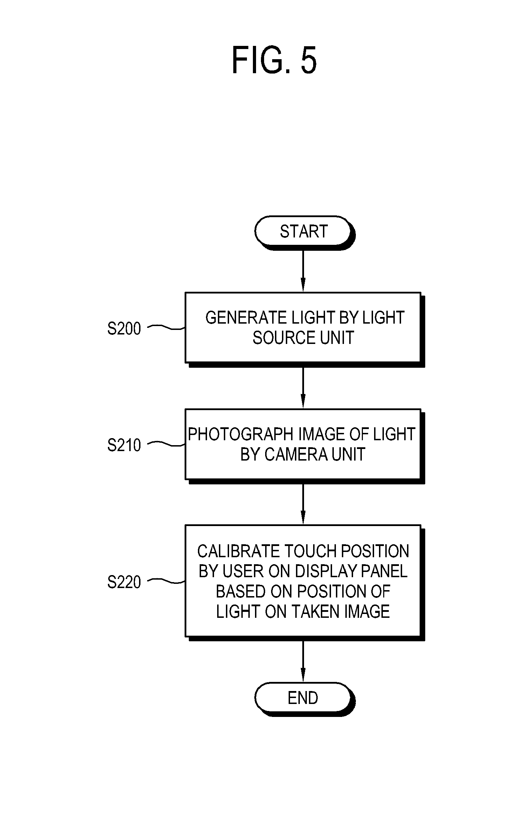

FIG. 5 is a flow chart illustrating a method of calibrating the display apparatus 100 according to an exemplary embodiment. Referring to FIG. 5, when the light source unit 130 generates light (S200), the camera unit 140 photographs an image of the light (S210). The controller 180 calculates a coordinate value indicating a position of the light on the image and calibrates a touch position by a user on the basis of the position of the light (S220).

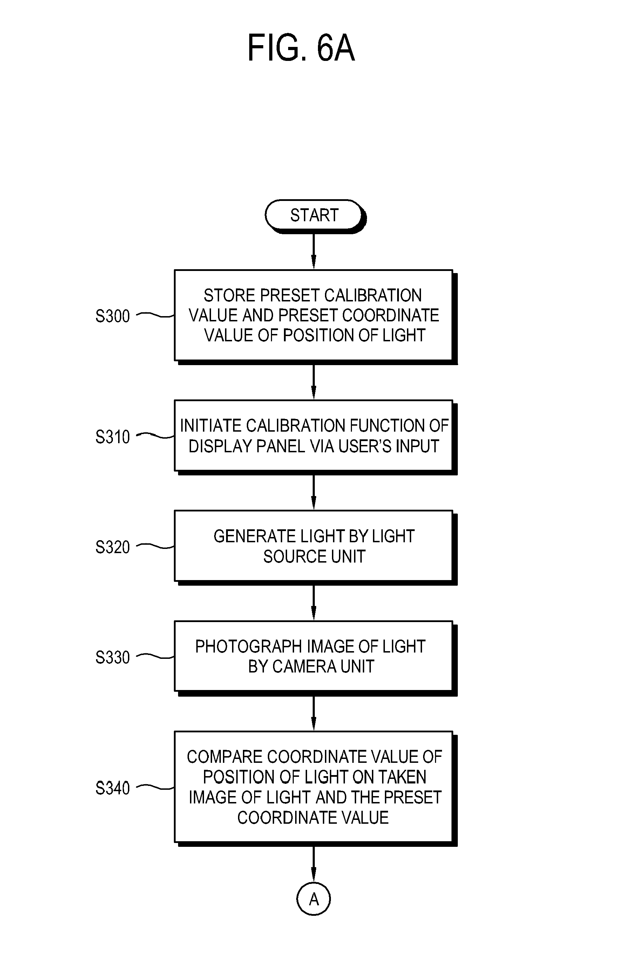

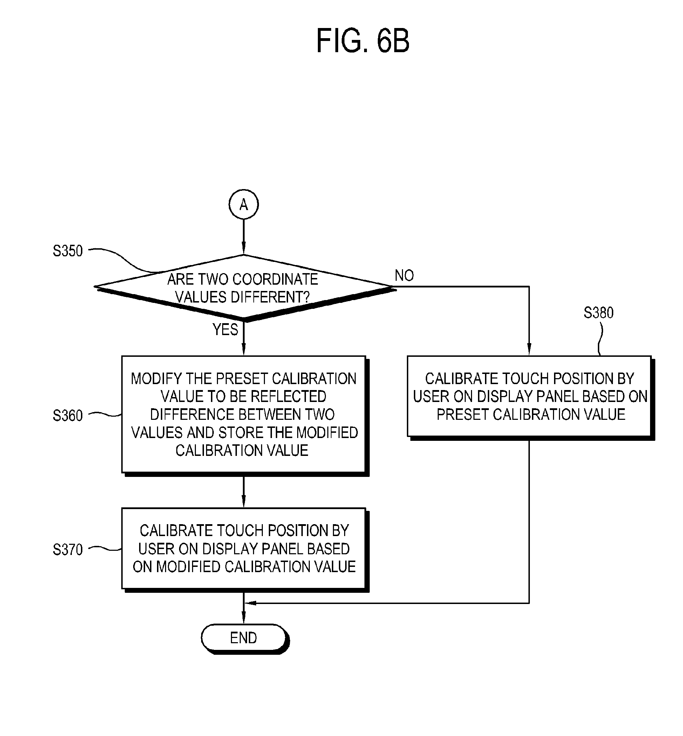

FIGs. 6A and 6B are a flow chart illustrating a method of calibrating a display apparatus 100 according to an exemplary embodiment. Referring to FIGs. 6A and 6B, the storage unit 160 stores a preset calibration value and a preset coordinate value of a position of light generated from the light source unit 130 (S300).

When a calibration function of the display panel is initiated by the user input unit (S310), the controller 180 controls the light source unit 130 to generate light (S320). Further, the controller controls the camera unit 140 to photograph an image of the light generated from the light source unit 130 (S330). The controller 180 calculates a coordinate value indicating the position of the light from the image taken by the camera unit 140 and compares the calculated coordinate value with the preset coordinate value of the position of the light stored in the storage unit 160 (S340).

As a result, when the calculated coordinate value and the preset coordinate value are determined to be different (S350), the controller 180 calculates a difference between the values, modifies the preset calibration value stored in the storage unit 160 to reflect the difference, and stores the modified calibration value in the storage unit 160 (S360). The controller 180 calibrates the display panel 110 on the basis of the modified calibration value stored in the storage unit 160 (S370).

Meanwhile, when the calculated coordinate value and the preset coordinate value are determined to be the same (S350), the controller 180 calibrates the display panel 110 on the basis of the preset modified calibration value stored in the storage unit 160 (S380).

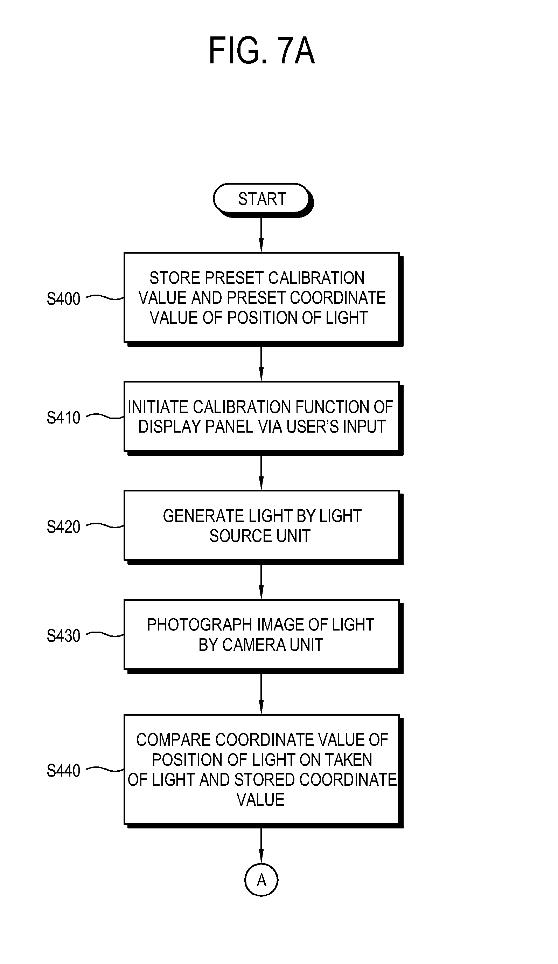

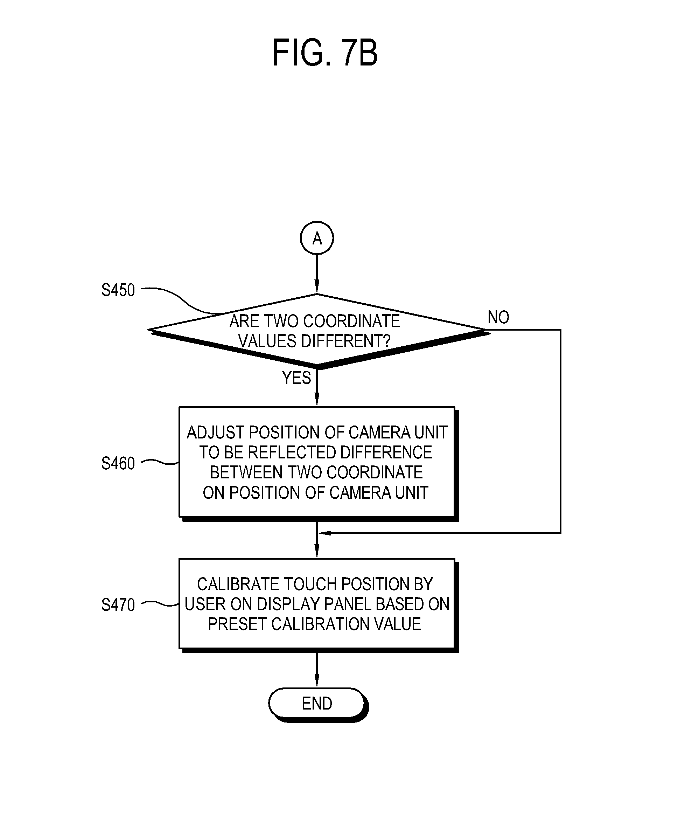

FIGs. 7A and 7B are a flow chart illustrating a method of calibrating the display apparatus 100 according to another exemplary embodiment. Referring to FIGs. 7A and 7B, the storage unit 160 stores a preset calibration value and a preset coordinate value of a position of light generated from the light source unit 130 (S400).

When a calibration function of the display panel 110 is initiated by the user input unit 170 (S410), the controller 180 controls the light source unit 130 to generate light (S420). Further, the controller 180 controls the camera unit 140 to photograph an image of the light generated from the light source unit 130 (S430). The controller 180 calculates a coordinate value indicating the position of the light from the image taken by the camera unit 140 and compares the calculated coordinate value with the preset coordinate value of the position of the light stored in the storage unit 160 (S440).

As a result, when the calculated coordinate value and the preset coordinate value are determined to be different (S450), the controller 180 calculates a difference between the values and controls the camera position adjustment unit 150 to adjust a position of the camera unit 140 by reflecting the difference on the position of the camera unit 140 (S460). When the position of the camera unit is adjusted, the controller 180 calibrates the display panel 110 on the basis of the preset calibration value stored in the storage unit 160 (S470).

Meanwhile, when the calculated coordinate value and the preset coordinate value are determined to be the same (S450), the controller calibrates the display panel 110 on the basis of the preset modified calibration value stored in the storage unit 160 (S470).

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, such as a carrier wave, and received and implemented in general-use digital computers that execute the programs. Moreover, while not required in all aspects, one or more units of the display apparatus 100 can include a processor or microprocessor executing a computer program stored in a computer-readable medium, such as the storage unit 160.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A display apparatus (100) comprising:
a display panel (110) arranged to display an image;
an image processor (120) arranged to process the image to be displayed on the display panel;
a light source unit (130) provided on the display panel and arranged to emit light;
a camera unit (140) arranged to photograph a touch detecting image to detect a touch position by a user on the display panel and to photograph a calibration image of the light emitted by the light source unit to the display panel; and
a controller (180) arranged to control the image processor to process the displayed image on the basis of the detected touch position by the user on the touch detecting image photographed by the camera unit and to calibrate the detected touch position by the user on the basis of a position of the emitted light on the calibration image photographed by the camera unit.

2. The display apparatus according to claim 1, wherein the light source unit is disposed on at least one corner of the display panel.

3. The display apparatus according to any preceding claim, further comprising a storage unit (160) arranged to store a preset calibration value and a preset coordinate value indicating an actual position of the emitted light on the display panel,
wherein the preset calibration value is a value used to correspond a coordinate value of the actual touch position by the user on the display panel to a coordinate value of the touch position detected on the touch detecting image photographed by the camera unit, and the controller is arranged to calibrate the detected touch position by the user according to the preset calibration value.

4. The display apparatus according to claim 3, wherein in response to a calibration function of the display panel being initiated, the controller is arranged to control the light source unit to emit the light to the display panel, to control the camera unit to photograph the calibration image of the emitted light, to compare the coordinate value of the position of the emitted light on the calibration image with the preset coordinate value stored in the storage unit, and, if the coordinate value of the position of the emitted light on the calibration image is different from the preset coordinate value, to modify the preset calibration value according to the difference and to control the storage unit to store the modified preset coordinate value.

5. The display apparatus according to claim 3, further comprising a camera position adjustment unit (150) arranged to adjust a position of the camera unit,
wherein in response to a calibration function of the display panel being initiated, the controller is arranged to control the light source unit to emit the light to the display panel, to control the camera unit to photograph the calibration image of the emitted light, and to compare the coordinate value of the position of the emitted light on the calibration image with the preset coordinate value stored in the storage unit, and, if the coordinate value and the preset coordinate value are determined to be different, to control the camera position adjustment unit to adjust the position of the camera unit according to a difference between the coordinate value and the preset coordinate value.

6. The display apparatus according to claim 4, further comprising a user input unit (170) arranged to receive a user's input to initiate the calibration function of the display panel.

7. The display apparatus according to any preceding claim, wherein the light source unit is arranged to emit infrared light.

8. The display apparatus according to any preceding claim, wherein the camera unit comprises a filter corresponding to a wavelength of the light emitted by the light source unit.

9. A method of calibrating a display apparatus, the method comprising:
emitting, by a light source unit provided on a display panel, light (S200);
photographing, by a camera unit, an image of the light emitted from the light source unit (S210); and
calibrating (S220) a touch position by a user on the display panel based on a position of the emitted light on the image photographed by the camera unit.

10. The method according to claim 9, wherein the light source unit is disposed on at least one corner of the display panel; and
wherein the light source unit emits infrared light.

11. The method according to any of claims 9 and 10, further comprising storing (S300), in a storage unit, a preset calibration value and a preset coordinate value indicating an actual position of the emitted light on the display panel,
wherein the calibrating the touch position comprises calibrating the touch position by the user according to the preset calibration value (S380), and
wherein the preset calibration value is a value used to correspond a coordinate value of the actual touch position by the user on the display panel to a coordinate value of the touch position detected on the touch detecting image photographed by the camera unit.

12. The method according to claim 11, further comprising:
comparing the coordinate value of the position of the emitted light on the image photographed by the camera unit with the preset coordinate value stored in the storage unit (S340); and
if the coordinate value of the position of the emitted light on the calibration image is different from the preset coordinate value, modifying the preset calibration value according to the difference and storing the modified preset calibration value in the storage unit (S370).

13. The method according to claim 11, further comprising:
comparing the coordinate value of the position of the emitted light on the image photographed by the camera unit with the preset coordinate value stored in the storage unit (S340); and
if the coordinate value of the position of the emitted light on the image is different from the preset coordinate value, adjusting a position of the camera unit according to a difference between the coordinate value and the preset coordinate value (S460).

14. The method according to any of claims 9 to 13, further comprising receiving, through a user input unit, a user's input to initiate a calibration function of the display panel.

15. The method according to any of claims 9 to 14, wherein the camera unit comprises a filter corresponding to a wavelength of the light emitted by the light source unit.
